# FASCICULE DE BREVET EUROPEEN

(11) **EP 1 273 087 B1**
(45) Date de publication et mention de la délivrance du brevet: **05.10.2011**
(21) Numéro de dépôt: 01994921.3
(22) Date de dépôt: 20.12.2001
(51) Int. Cl.: H02K 5/14, H01R 39/38

(54) **MACHINE ELECTRIQUE A ENSEMBLE PORTE-BALAIS ET PROCEDE D'ASSEMBLAGE D'UNE MACHINE ELECTRIQUE POURVUE D'UN TEL ENSEMBLE**
ELEKTRISCHE MASCHINE MIT BÜRSTENHALTERBAUGRUPPE UND VERFAHREN ZUM ZUSAMMENBAU EINER MIT EINER SOLCHEN BAUGRUPPE AUSGESTATTETEN ELEKTRISCHEN MASCHINE
ELECTRIC MACHINE WITH BRUSH-HOLDER ASSEMBLY AND METHOD FOR ASSEMBLING AN ELECTRIC MACHINE PROVIDED WITH SUCH AN ASSEMBLY

(30) Priorité: 21.12.2000 FR 0016737; 27.04.2001 FR 0105770; 27.04.2001 FR 0105771
(43) Date de publication de la demande: 08.01.2003
(73) Titulaire: VALEO EQUIPEMENTS ELECTRIQUES MOTEUR, 94017 Créteil (FR)
(72) Inventeur: VACHERON, Xavier, F-69003 Lyon (FR); IZQUIERDO, José, F-38090 Villefontaine (FR); PERARD, Sébastien, F-69003 Lyon (FR); ROUILLARD, Yann, F-69003 Lyon (FR)
(74) Mandataire: Gamonal, Didier
(86) Numéro de dépôt international: PCT/FR2001/004087
(87) Numéro de publication internationale: WO 2002/050981

(56) Documents cités:
- EP-A- 0 706 255
- US-A- 4 293 789
- US-A- 4 694 214
- US-A- 5 172 465
- US-A- 5 444 320

## Description

### Domaine de l'invention

La présente invention concerne une machine électrique tournante dotée d'un ensemble porte-balais, notamment pour démarreur de véhicule automobile ainsi qu'un procédé d'assemblage d'une machine électrique pourvue d'un tel ensemble.

### Etat de la technique

Selon une configuration connue, un ensemble porte-balais comporte essentiellement un ensemble de cages de raccordement électrique des balais, une plaque de support en matériau électriquement conducteur sur laquelle sont fixées les cages, le cas échéant avec interposition d'une plaquette électriquement isolante, pour ce qui concerne les cages destinées à être raccordées à une source d'alimentation en courant, et un capot métallique formant palier sur lequel est montée la plaque de support et les cages qu'elle porte.

L'ensemble ainsi réalisé vient se monter sur la carcasse de la machine électrique.

Classiquement, la plaque de support des cages de balai vient se monter par vissage sur le capot, les vis utilisées assurant, d'une part, la fixation mécanique de la plaque de support sur le capot et, d'autre part, son raccordement à la masse. Les cages de guidage des balais sont pourvues intérieurement de moyens élastiques sollicitant, en fonctionnement, les balais radialement en appui contre un collecteur de la machine électrique solidaire de l'arbre d'induit de celle-ci

Selon une variante de cette technique, par exemple décrite dans WO 00/51209, le support des cages de balai est fixé au moyen de rivets sur le capot.

Une autre technique de montage consiste à fixer la plaque de support par coincement de cette dernière entre le capot et une culasse de la machine. On effectue ainsi directement le raccordement à la masse de la plaque de support.
Une autre technique connue consiste à fixer les cages de raccordement électrique des balais directement sur le capot formant palier, le cas échéant avec interposition de plaquettes électriquement isolantes.
Dans toutes les configurations de l'ensemble porte-balais il faut prévoir un organe, dit organe de limitation, formant butée de limitation du déplacement radial des balais en l'absence de collecteur pour éviter que les balais fassent obstacle au montage du collecteur de la machine solidaire de l'arbre d'induit.

Les documents US-A-4694214 et US-A-5172465 décrivent chacun une machine électrique correspondant au préambule de la revendication 1.

C'est donc un but de l'invention de fournir un ensemble porte-balais pour machine électrique à organe de limitation, dont l'assemblage est aisément automatisable dans une chaîne de fabrication, et ce avec un coût réduit.
Suivant l'invention une machine électrique du type sus-indiquée est caractérisée en ce que les dimensions de l'organe de limitation sont adaptées pour obtenir un montage serré de cet organe sur le capot.
Grâce à l'invention après montage du collecteur l'organe de limitation reste prisonnier du capot.
Dans une forme de réalisation le capot porte à fixation une douille d'orientation axiale et l'organe de limitation est monté à serrage sur la périphérie externe de cette douille, dont la périphérie interne sert de support à un palier pour montage tourillonnant de l'arbre de l'induit de la machine. La douille a ainsi une double fonction de manière simple et économique.
Dans une forme de réalisation le collecteur de la machine présente à sa périphérie interne une collerette axialement saillante pour contact avec la périphérie interne de l'organe de limitation.
Grâce au contact de la collerette avec la périphérie interne de l'organe de limitation on évite que cet organe se mette en biais lors du montage de la machine.
Après montage de la machine (en présence du collecteur) le contact de la collerette avec l'organe de limitation permet de freiner l'arbre d'induit de la machine lors de l'arrêt de celle-ci. Ceci est particulièrement important lorsque la machine est un démarreur car cela permet de réduire les temps morts entre deux tentatives de démarrage.
Ce contact permet également de caler axialement l'arbre d'induit.
La collerette selon l'invention constitue donc un outil pour déplacer axialement au montage l'organe de limitation. Cette collerette appartient après montage (ou assemblage) de la machine à un dispositif de freinage et de calage axial de l'arbre d'induit en sorte que l'on tire partie de l'organe de limitation du fait que celui-ci est monté à serrage sur le capot.
Ce serrage permet de réduire les bruits et rend l'organe de limitation imperdable.
Avantageusement un jeu axial existe après montage entre le capot et l'organe de limitation pour notamment s'affranchir des tolérances de fabrication et obtenir avec certitude une libération des balais. Ce jeu permet également un bon calage axial et un bon freinage de l'arbre d'induit.
Le jeu permet également de ménager un espace de ventilation entre l'organe de limitation et le capot. La transmission de chaleur du capot à l'organe de limitation est réduite du fait de ce jeu.
Dans une forme de réalisation cette collerette est fragmentée en secteurs annulaires pour notamment ménager des espaces de ventilation. La taille axiale de la collerette est dans un mode de réalisation réduite en sorte que celle-ci se réduit à un bourrelet de forme annulaire ce qui est favorable pour la réduction de l'encombrement axiale et pour réduction axiale et la robustesse de la collerette.
L'extrémité libre de la collerette est dans un mode de réalisation profilée pour contact local avec l'organe de limitation.
Par exemple cette extrémité libre est de forme arrondie.
La collerette est dans un mode de réalisation en forme de godron.
L'organe de limitation comporte avantageusement une rondelle pour réduction de l'encombrement axial de la machine.
Dans une forme de réalisation cet organe est une rondelle venant se serrer sur la périphérie externe d'une douille d'orientation axiale solidaire, par exemple par soudage, du capot.
Dans une autre forme de réalisation la rondelle est raccordée au capot métallique par des moyens frangibles adaptés pour être rompus par le collecteur au cours de son insertion entre les balais.
Le capot est alors avantageusement pourvu d'un logement de réception de la rondelle après rupture des moyens frangibles. Il en est de même lorsque la rondelle n'est pas dotée de moyens frangibles.
Dans tous les cas les dimensions de la rondelle sont adaptées pour obtenir un montage serré de cette dernière sur le capot, au moins lorsqu'elle se situe dans le logement.

Dans une forme de réalisation, notamment pour formation du logement précité, le capot présente deux surélévations pour la fixation et le support d'une plaquette électriquement isolante portant les cages de guidage.

Un dégagement est ainsi réalisé entre les deux surélévations ce qui permet de réaliser un espace de ventilation entre la plaquette électriquement isolante et le capot. Ce dégagement appartient au logement de la rondelle et peut constituer à lui seul le logement.

En variante le capot est également déformé, par exemple par emboutissage vers l'extérieur pour réaliser le logement.

Dans une forme de réalisation chaque surélévation présente une zone centrale et deux zones latérales, de moindre étendue radiale que la zone centrale, s'étendant de part et d'autre de la zone centrale.

Grâce à cette disposition il est possible de fixer par rivetage sur la plaquette isolante les cages destinées à être reliées à une borne d'alimentation positive.

En effet la différence de taille radiale des zones latérales permet d'implanter les rivets de fixation des cages précitées sans que ceux-ci soient en contact avec le capot.

Ces rivets sont alors montés au niveau du dégagement entre les deux surélévations. Ces zones latérales délimitent ce dégagement et permettent grâce à leur forme l'implantation des rivets de fixation de ces cages dans le dégagement entre les deux surélévations, s'étendant par définition en saillie par rapport au reste du capot. Ces surélévations sont des protubérances.

Pour optimiser le dégagement les surélévations ont globalement une forme de croissant avec deux zones latérales se raccordant à la périphérie externe de la zone centrale.

La périphérie externe des zones latérales prolonge avantageusement la périphérie externe de la zone centrale en sorte que la périphérie externe des surélévations constitue dans une forme de réalisation une zone de centrage pour le capot en vue de son montage à la manière d'un couvercle par exemple dans la carcasse ou culasse de la machine tournante. Dans tous les cas le capot est un capot multifonctions et est avantageusement en tôle pour réaliser de manière simple et économique ces fonctions, sachant que les surélévations rigidifient le capot, qui ainsi peut être de faible épaisseur.

Ainsi qu'il ressort à l'évidence de ce qui précède, les cages de raccordement électrique des balais sont directement montées sur le capot, ce qui simplifie et améliore le raccordement à la masse des balais de retour de courant. En outre, on utilise des rivets intégrés soit aux cages soit au capot ce qui simplifie grandement l'opération de montage et rend cette dernière aisément automatisable. De préférence on utilise des rivets à base obturée pour obtenir une bonne étanchéité à l'eau.

La tige du rivet est avantageusement constituée par une partie extrudée de la pièce à partir de laquelle elle s'étend

L'invention a également pour objet un procédé d'assemblage d'une machine électrique pourvue d'un ensemble porte-balais tel que défini ci-dessus, caractérisé en ce qu'il comporte les étapes consistant à riveter les organes de raccordement électrique des balais sur le capot, insérer les moyens élastiques dans les cages de guidage, positionner les balais dans les cages de guidage en appui contre les moyens élastique, insérer l'organe de limitation du déplacement radial des balais, et positionner l'ensemble porte-balais ainsi réalisé autour du collecteur de la machine de sorte que ce dernier exerce par l'intermédiaire de sa collerette une poussée sur l'organe de limitation du déplacement des balais telle que ces derniers soient libérés dudit organe. Dans ce document le porte-balais pour machine électrique, comporte un capot métallique formant palier destiné à être monté sur une carcasse de la machine et un ensemble d'organes de raccordement électrique des balais montés sur le capot au moyen de rivets qui comportent chacun au moins une tige s'étendant à partir de l'une des pièces constituées par le capot et l'un desdits organes, traversant un orifice pratiqué dans l'autre pièce et rabattu contre cette dernière. Suivant une caractéristique ladite tige est venue de matière avec la pièce à partir de laquelle elle s'étend et comporte une base obturée.

### Description des dessins

D'autres buts, caractéristiques et avantages ressortiront de la description suivante, donnée uniquement à titre d'exemple non limitatif, et faite en référence aux dessins annexés sur lesquels :
- la figure 1 est une vue en perspective d'une plaque de support de cages de raccordement électrique de balais d'un ensemble porte-balais selon l'état de la technique ;
- la figure 2 est une vue en perspective d'un capot de l'ensemble porte-balais correspondant à la plaque de support représentée sur la figure 1, sur lequel cette dernière vient se fixer ;
- la figure 3 est une vue en perspective d'un ensemble porte-balais conforme à l'invention ;
- la figure 4 est une vue en coupe d'une partie du capot formant palier de l'ensemble de la figure 3, avant assemblage ;
- la figure 5 montre le capot de la figure 4 après montage d'une plaquette isolante ;
- la figure 6 est une vue partielle en coupe selon la ligne VI-VI de l'ensemble porte-balais de la figure 3 ;
- la figure 7 est une vue partielle en coupe selon la ligne VII-VII de l'ensemble porte-balais de la figure 3 ;
- la figure 8 illustre un autre mode de réalisation d'un ensemble porte-balais selon l'invention ; et
- la figure 9 est une vue partielle en coupe selon la ligne IX-IX de l'ensemble porte-balais de la figure 8.
- la figure 10 est une vue partielle en coupe d'un autre exemple de réalisation d'un ensemble porte-balais conforme à l'invention, montrant le collecteur de la machine destiné à s'insérer entre les balais ;
- la figure 11 illustre l'ensemble porte-balais de la figure 10 en cours d'insertion du collecteur entre les balais ; et
- la figure 12 montre l'ensemble porte-balais des figures 10 et 11 après insertion complète du collecteur de la machine entre les balais ;
- la figure 13 est une vue de face du porte-balais pour un troisième exemple de réalisation ;
- la figure 14 est une vue en perspective du capot de la figure 13 ;
- la figure 15 est une vue en perspective du passe-fil ;
- la figure 16 est une vue en perspective de la plaquette isolante ;
- la figure 17 est une vue en coupe axiale selon la ligne 17-17 de la figure 13 ;
- la figure 18 est une vue en perspective d'un capuchon d'isolation d'une cage de guidage ;
- la figure 19 est une vue en perspective d'une cage de guidage ;
- la figure 20 est une vue partielle en coupe montrant après montage la position de l'organe de limitation du déplacement des balais ;
- . la figure 21 est une vue analogue à la figure 13 pour un autre exemple de réalisation ;
- la figure 22 est une vue partielle en coupe axiale montrant la partie centrale du capot avec sa douille pour un autre exemple de réalisation.

### Description des modes de réalisation préférés de l'invention

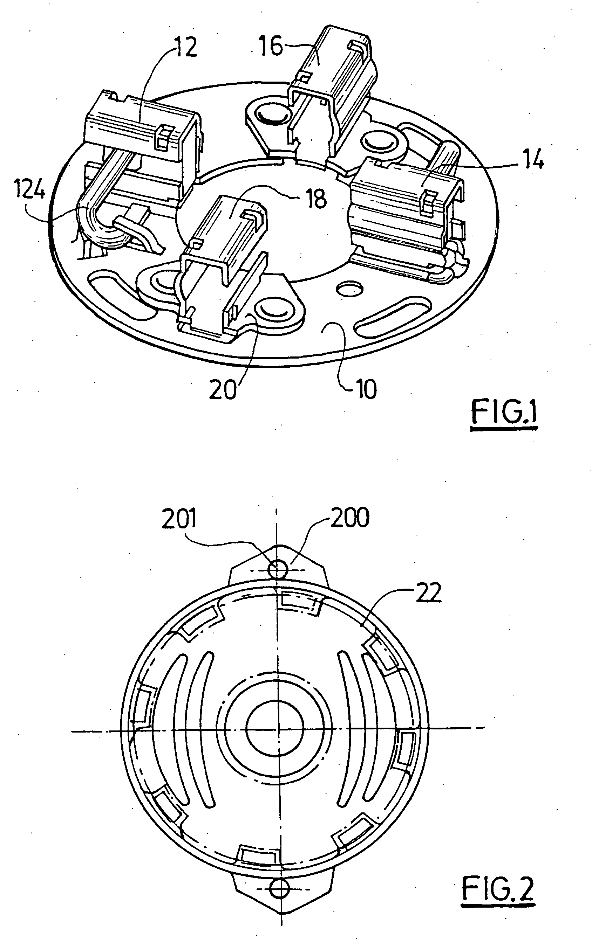

En référence aux figures 1 et 2, on va tout d'abord décrire un ensemble porte-balais selon l'état de la technique, pour démarreur de véhicule automobile.

Cet ensemble porte-balais comporte essentiellement une plaque de support 10 métallique, visible sur la figure 1, sur laquelle sont fixés un ensemble de cages électriquement conductrices de raccordement de balais 12, 14, 16 et 18, avec interposition d'une plaquette, telle que 20, en matériau électriquement isolant, et un capot 22 formant palier arrière, visible sur la figure 2, sur lequel viennent se fixer la plaque de support 10 et les cages 12, 14, 16 et 18 qu'elle porte. Le capot 22, comme visible sur la figure 2, comporte par exemple deux oreilles 200, traversées chacune par un trou 201 pour le passage de tirants (non représentés) vissés sur le palier avant du démarreur comme visible dans le document FR-A-2 796 990. Le palier avant du démarreur porte le pignon du lanceur d'une manière connue en soi, comme par exemple dans les documents FR-A- 2,783,090 et FR-A-2 796 990.

Deux des cages, à savoir les cages désignées par les références numériques 12 et 14, destinées à recevoir des balais de retour de courant, sont raccordées à la plaque de support 10 au moyen de conducteurs 124 appropriés.

La plaque de support 10 est fixée par vissage sur le capot 22 formant palier.

Les vis utilisées pour la fixation de la plaque de support 10 sur le capot 22 assurent, d'une part, la fixation mécanique de la plaque 10 sur ce dernier et, d'autre part, son raccordement électrique à la masse.

Un problème de maintien des balais se pose avant montage ou assemblage de la machine lorsque le porte-balais n'est pas encore monté sur la culasse de la machine car les balais sont soumis à l'action de moyens élastiques sollicitant ceux-ci radialement vers le centre.

Il faut donc prévoir un organe de limitation formant butée du déplacement radial des balais en l'absence du collecteur que comporte la machine électrique tournante. Cet organe, (dit organe de limitation) dans une forme de réalisation consiste en une rondelle de diamètre externe légèrement supérieur au diamètre externe du collecteur, qui ainsi qu'on le sait est solidaire de l'arbre d'induit de la machine et du rotor de celle-ci. Cette rondelle peut être évacuée après montage du collecteur le capot étant alors ouvert centralement pour passage de la rondelle, puis refermé par un capuchon.

Un but de l'invention est de tirer partie de cet organe de limitation du débattement des balais vers le centre avant montage du collecteur de la machine

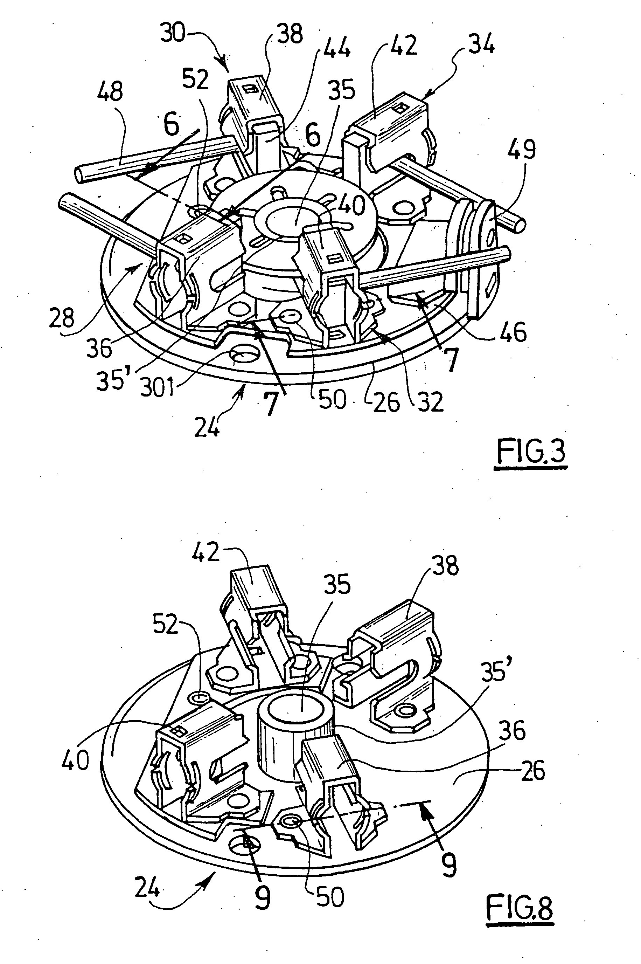

On va décrire en référence aux figures 3 à 7, un premier exemple de réalisation d'un ensemble porte-balais selon l'invention, répondant à ce souhait tout en permettant une automatisation plus poussée sans défauts de montage de l'ensemble porte-balais.

Cet ensemble porte-balais, désigné par la référence numérique générale 24, est destiné à être monté sur une carcasse d'une machine électrique constituée par un démarreur de véhicule automobile comportant un contacteur magnétique comprenant une borne d'alimentation en courant des cages d'alimentation en courant de l'ensemble porte-balais. Pour plus de précisions sur le démarreur on se reportera par exemple au document FR A 2783090 précité.

En se référant tout d'abord à la figure 3, l'ensemble porte-balais 24 comporte essentiellement un capot métallique 26 formant le palier arrière de la machine électrique, et un ensemble d'organes 28, 30, 32 et 34 de raccordement électrique des balais, fixés sur le capot 26 au moyen de rivets.

De façon connue en soi par exemple par le document FR-A-2 796 990, le capot 26 formant palier est pourvu d'une alvéole centrale 35 non débouchante dans laquelle est destiné à tourillonner l'arbre d'induit de la machine électrique.

Cette alvéole est délimitée par une douille 35' d'orientation axiale décrite ci-après.

Suivant une caractéristique l'organe de limitation précité est en contact de serrage à sa périphérie interne avec la périphérie externe de la douille. Ce serrage dépend des applications et est calculé pour autoriser un déplacement axial de l'organe de limitation axialement le long de la douille 35. L'organe de limitation est ainsi monté à serrage sur le capot.

Dans l'exemple de réalisation visible sur cette figure, les organes de raccordement électriques des balais comportent un ensemble de cages de guidage 36, 38, 40 et 42 électriquement conductrice destinées chacune à recevoir et à guider un balai, tel que 44, et une plaquette électriquement isolante 46, réalisée à partir d'un matériau approprié pour l'utilisation envisagée, par exemple, un matériau moulable, tel qu'une matière plastique.

Les cages de guidage sont ici métalliques en étant ici en tôle pré-cuivrée en sorte que la solution est simple et économique.

Comme cela est classique, les balais 44 sont destinés à venir en contact avec des pistes collectrices d'un collecteur ou commutateur axial que présente la machine électrique. Un organe élastiquement déformable, placé dans chaque cage 36, 38, 40 et 42 sollicite les balais radialement en appui contre les pistes collectrices du collecteur.

Les pistes collectrices sont d'orientation axiale et les balais 44 d'orientation radiale pour réduire l'encombrement axial de la machine électrique.

Une partie des cages, à savoir les deux cages désignées par les références numériques 36 et 38, sont destinées à recevoir des balais négatifs ou de retour de courant, les autres cages, à savoir les cages désignées par les références numériques 40 et 42, étant destinées à recevoir les balais d'alimentation en courant.

Ces balais sont reliés électriquement dans le cas d'un démarreur à l'une des bornes d'alimentation précitée du contacteur électromagnétique du démarreur.

Ainsi, des câbles électriquement conducteurs, tels que des tresses en cuivre 48, permettent, d'une part, l'alimentation de deux des balais d'alimentation en courant, par l'intermédiaire d'un passe-fil 49 destiné à traverser la carcasse de la machine électrique pour assurer la connexion de ces balais à une borne d'alimentation positive et, d'autre part, le raccordement à la masse des balais 44 de retour de courant par raccordement des câbles correspondants, par exemple par soudage, au capot 26.

Comme cela sera décrit en détails par la suite, une rondelle 64, formant un faux collecteur et constituant une forme de réalisation de l'organe de limitation, permet le montage de l'ensemble porte-balais en repoussant les balais vers la périphérie externe.

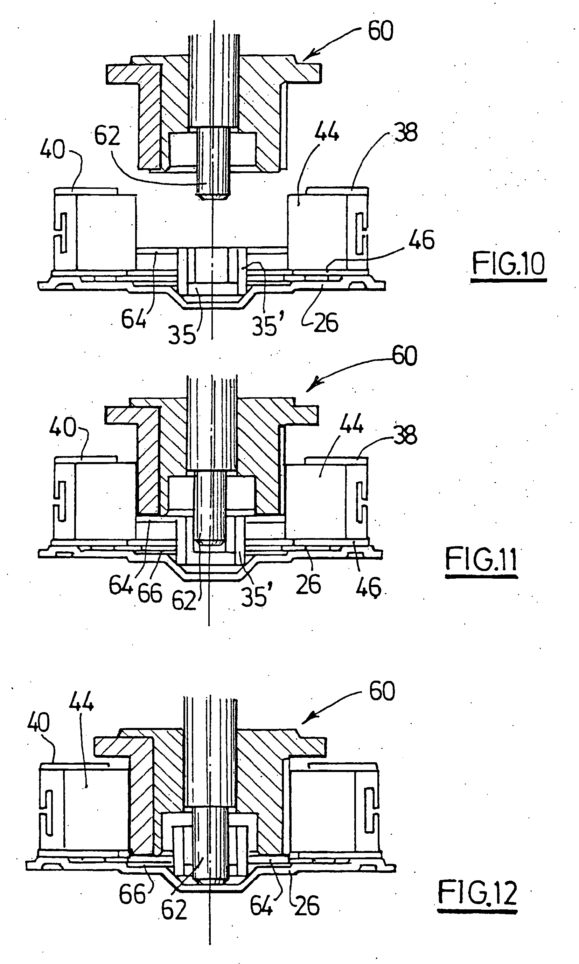

Au moins deux orifices 301, réalisés à travers le capot métallique 26 permettent le passage de tirants, pour la fixation du capot. Dans ce cas, les tirants passent entre les aimants qui sont fixés à l'intérieur de la carcasse pour former l'inducteur. Ces tirants sont vissés dans des taraudages réalisés par exemple dans le palier avant du démarreur portant l'extrémité avant de l'arbre d'induit 62, dont l'extrémité arrière est visible dans les figures 10 à 12 et 20.

Les tirants passent ici à l'intérieur de la carcasse, classiquement de forme cylindrique et métallique que présente la machine comme visible dans le document FR-A-2 796 990 précité. C'est via cette carcasse qu'est assuré le retour à la masse.

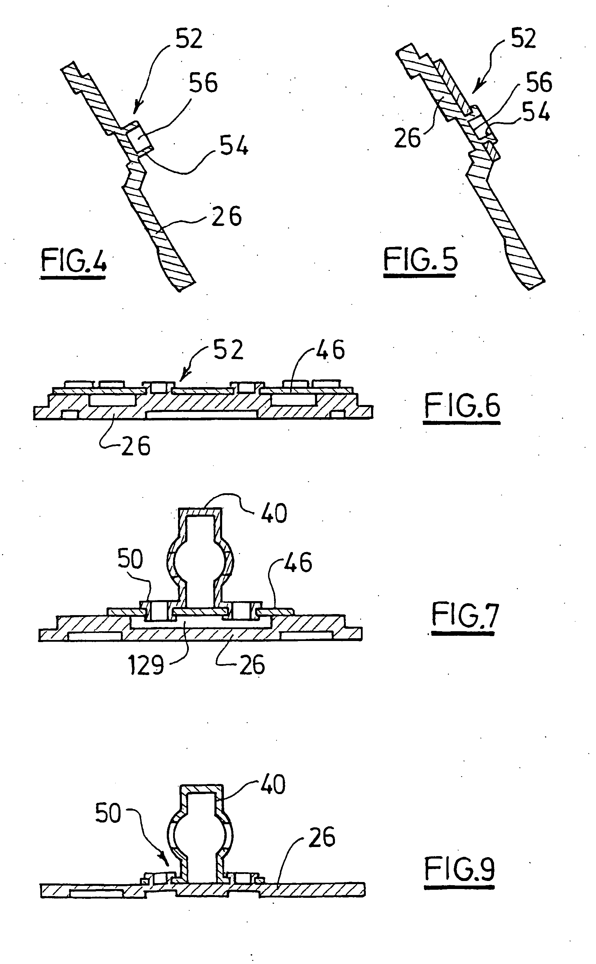

En se référant également aux figures 4 à 7, les cages de guidage 36, 38, 40 et 42 sont fixées sur la plaquette isolante 46 au moyen de rivets, tels que 50.

La plaquette isolante 46 est, quant à elle, fixée sur le capot 26 formant palier au moyen de rivets 52.

Comme représenté sur les figures 4 à 6, selon une caractéristique, les rivets 52 utilisés pour la fixation de la plaquette 46 sur le capot 26 se présentent chacun sous la forme d'une tige creuse 54 venue de matière avec le capot 26 pour ne pas détériorer l'étanchéité de celui-ci.

La tige creuse 54 est réalisée par extrusion au cours de la fabrication du capot 26, par frappe de ce dernier contre l'empreinte d'un moule femelle de manière à réaliser, lors du démoulage, une tige 54 en forme de collerette venue de matière avec le capot 26 et s'étendant en saillie à partir de l'une de ses grandes faces.

Comme on le voit sur ces figures, la tige 54 du rivet 52 comporte un fond 56 obturé par la matière du capot 26.

Pour la solidarisation de la plaquette isolante 46 et du capot 26, la tige 54 de chaque rivet 52 traverse un orifice pratiqué dans la plaque isolante 46 et est rabattu, par son extrémité libre, contre cette dernière.

Dans l'exemple de réalisation décrit en référence aux figures 4 à 6, les rivets sont venus de matière avec le capot 26 formant palier.

Bien entendu, il est possible de réaliser ces rivets à partir de la plaquette isolante 46, par extrusion, de manière à pratiquer dans cette dernière une tige creuse à fond obturé venant s'engager dans un orifice pratiqué dans le capot 26.

Le rivetage est alors réalisé à chaud.

En se référant maintenant à la figure 7, les cages métalliques de guidage sont, quant à elles, fixées sur la plaquette isolante 46 au moyen de rivets 50 conventionnels rapportés ou au moyen de rivets similaires aux rivets décrits précédemment, c'est-à-dire soit respectivement venus de matière avec les cages, soit venus de matière avec la plaquette isolante 46.

Comme on le conçoit, l'ensemble porte-balais qui vient d'être décrit, qui utilise des cages de guidage de balais, ici métalliques, directement fixées sur le capot formant palier de la machine électrique qu'ils sont destinés à alimenter, en utilisant des rivets venus de matière soit avec une plaquette isolante sur laquelle les cages sont fixées, soit avec le capot, permet un assemblage de l'ensemble au moyen de machines automatiques, tout en réduisant les coûts et d'améliorer sensiblement les échanges thermiques entre les cages et le capot.

On obtient en outre une très bonne étanchéité à l'eau dans la mesure où l'on utilise des rivets constitués de tiges à fond obturé.

Bien entendu en variante les cages sont en matière plastique.

On notera cependant que l'invention n'est pas limitée au mode de réalisation décrit.

En effet, dans l'exemple de réalisation décrit précédemment en référence aux figures 3 à 7, les deux balais de retour de courant sont raccordés à la masse par l'intermédiaire de conducteurs connectés au capot 26.

Comme visible sur les figures 8 et 9, sur lesquelles des éléments identiques à ceux des figures 3 à 7 sont désignés par les mêmes références numériques, il est possible de fixer les cages 36 et 38 directement sur le capot 26 au moyen de rivets similaires à ceux décrits précédemment, c'est à dire se présentant par exemple sous la forme de tiges creuses venues de matière soit avec les cages 36 et 38 soit avec le capot 26, de manière à assurer leur fixation mécanique sur le capot 26 et leur raccordement électrique avec ce dernier, les autres cages 40 et 42 étant, quant à elles, fixées comme précédemment décrit, sur la plaquette isolante 46 par rivetage. La plaquette 46 est alors simplifiée.

Bien entendu, ces cages de retour de courant peuvent également être directement soudées sur le capot 26.

On notera enfin qu'il est possible de réaliser chaque rivet selon toute forme appropriée pour l'utilisation envisagée, c'est-à-dire sous la forme d'une tige pleine, de tiges sous forme de griffes.

On va maintenant décrire, en référence aux figures 10 à 12, un autre exemple de réalisation d'un ensemble porte-balais conforme à l'invention.

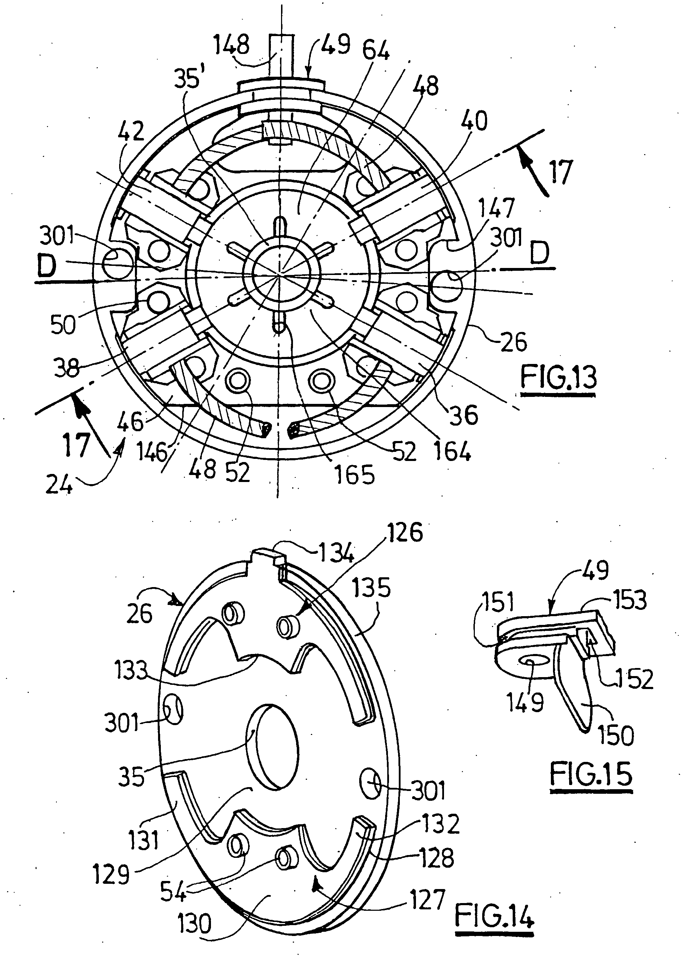

Sur ces figures, des éléments identiques à ceux des ensembles porte-balais décrits précédemment en référence aux figures 3 à 9 portent les mêmes références numériques. Il en est de même dans les figures 13 à 20.

En se référant tout d'abord à la figure 10, comme dans l'exemple de réalisation décrit précédemment, l'ensemble porte-balais comporte un capot métallique 26 formant le palier arrière de la machine électrique, et un ensemble de cages, telles que 38 et 40, destinées chacune à recevoir et à guider un balai, tel que 44, lequel est destiné à venir en contact avec des pistes collectrices d'un collecteur 60 de la machine électrique.

Une partie des cages, ici métallique, est destinée à recevoir des balais négatifs ou de retour de courant, les autres cages étant destinées à recevoir les balais d'alimentation en courant.

Les cages de guidage des balais sont fixées sur le capot 26 au moyen de rivets identiques à ceux décrit précédemment avec interposition, au moins en ce qui concerne les balais d'alimentation, d'une plaquette isolante 46.

En ce qui concerne le capot 26 formant palier, celui-ci est pourvu d'une alvéole centrale 35 de forme générale cylindrique, non débouchante, dans laquelle est destiné à tourillonner l'arbre d'induit 62 de la machine électrique.

L'alvéole 35 est délimitée par une douille 35' décrite ci-après.

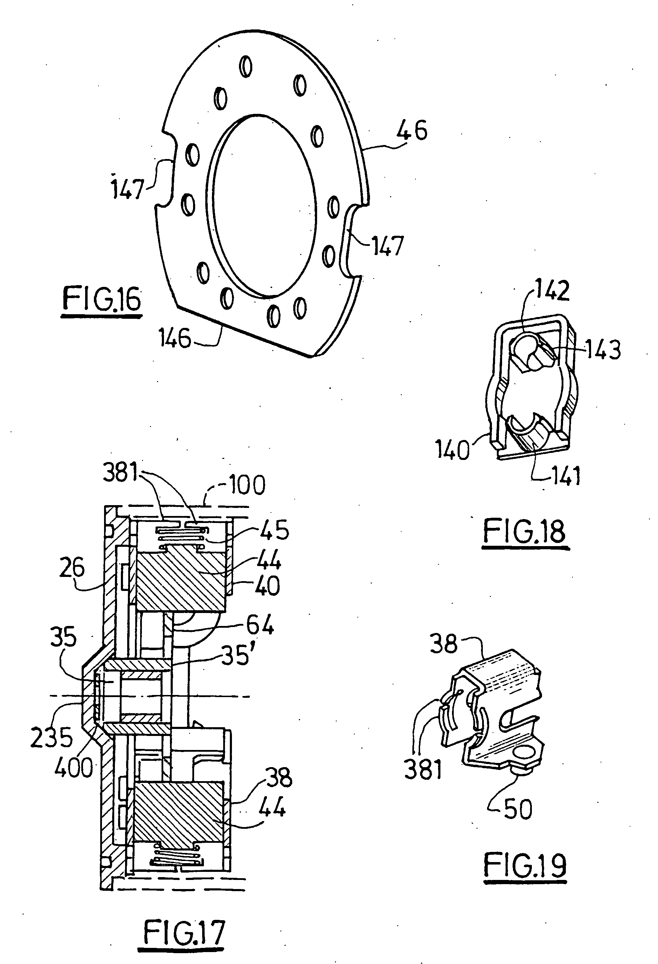

Comme indiqué précédemment, les balais 44 sont insérés dans les cages 38 et 40 avec insertion d'un organe élastique représenté en 45 à la figure 17 sollicitant les balais, en fonctionnement, en appui contre les pistes collectrices du collecteur 60 de la machine électrique tournante.

A l'état non assemblé, visible sur les figures 10, 11 et 17, et en particulier lorsque le collecteur 60 n'est pas encore inséré entre les balais 44, on utilise un organe de limitation du déplacement radial des balais contre lequel ces derniers viennent buter en l'absence de collecteur 60.

Plus particulièrement, et comme mentionné précédemment, cet organe de limitation, désigné par la référence numérique générale 64 se présente sous la forme d'une rondelle, décrite ci-après, insérée entre les balais 44 contre la paroi périphérique de laquelle viennent buter les balais 44.

Le diamètre externe de la rondelle 64 est sensiblement supérieur au diamètre correspondant du collecteur 60 de manière à délimiter un espace suffisant pour permettre l'insertion de ce dernier.

Comme on le voit sur la figure 10, la rondelle 64 vient s'insérer sur le pourtour extérieur de l'alvéole 35 du capot 26, c'est-à-dire sur la douille 35'.

En se référant maintenant aux figures 11 et 12, lors de l'insertion du collecteur 60, celui-ci exerce un effort sur la rondelle 64 tel qu'il déplace cette dernière le long des balais. En fin de course du collecteur 60, c'est-à-dire après montage de la machine lorsque le collecteur est complètement inséré entre les balais 44, la rondelle 64 vient se loger dans un dégagement 66 ménagé à cet effet dans le capot 26. Dans cette position, les balais sont libérés de la rondelle 64 et viennent dès lors en appui, sous l'action des moyens élastiques prévus à cet effet, contre les pistes collectrices du collecteur 60 solidaire de l'arbre d'induit 62 de la machine.

Suivant une caractéristique, comme à la figure 3, le diamètre interne de la rondelle 64 est choisi pour obtenir un ajustement serré de cette dernière sur la périphérie externe de la douille 35' de l'alvéole 35, dans la position de stockage, afin d'éviter qu'elle ne ballotte dans le logement 66, ce qui serait susceptible d'engendrer des bruits lors du fonctionnement du démarreur. Bien entendu, avant montage de la machine c'est à dire en l'absence du collecteur, cette rondelle est maintenue par la pression radialement interne exercée par les balais sollicités par les ressorts 45.

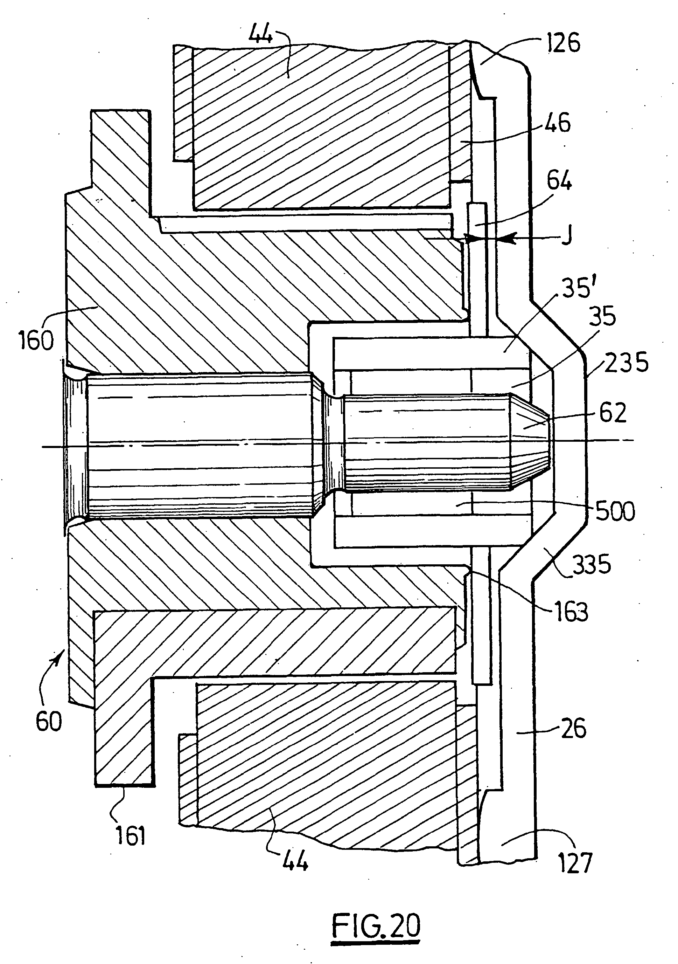

Comme on le conçoit, après montage de la machine électrique, la rondelle 64 constitue une surface contre laquelle vient prendre appui l'extrémité libre du collecteur comme mieux visible à la figure 20. Cette surface peut être utilisée pour freiner rapidement l'induit lors de l'arrêt de la machine électrique. On réduit ainsi considérablement les bruits engendrés au cours de la période de ralentissement. Cette caractéristique est particulièrement avantageuse lorsque la machine électrique est constituée par un démarreur de véhicule automobile, dans la mesure où elle permet de réduire les temps morts entre deux tentatives de démarrage.

On conçoit également que la rondelle 64 peut être utilisée pour réaliser un calage axial de l'induit.

Pour ces applications, on prévoit, de préférence, un organe élastique entre la rondelle 64 et le capot 26 de manière à la solliciter en appui contre le collecteur.

Dans l'exemple de réalisation qui vient d'être décrit, on a considéré que la rondelle 64 est constituée par un organe distinct du capot 26 sur lequel elle vient se monter.

Bien entendu, en particulier dans les cas où le capot 26 est réalisé par moulage d'une matière plastique, la rondelle 64 peut être réalisée sous la forme d'un organe venu de moulage avec le capot 26 et raccordé à ce dernier par des moyens frangibles, par exemple sous la forme de bras adaptés pour être rompus par le collecteur 60 au cours de son insertion.

On notera que l'opération d'assemblage d'une machine électrique pourvue d'un ensemble porte balais selon cet exemple de réalisation est une opération relativement aisée à mettre en oeuvre dans une chaîne de fabrication à haute cadence, dans la mesure où, après rivetage des organes de raccordement électrique des balais sur le capot 26, il convient simplement d'insérer des moyens élastiques dans les cages de guidage, de positionner les balais 44 dans les cages, en appui contre les moyens élastiques 50, d'insérer la rondelle 64 sur la douille 35' de l'alvéole 35 de manière à écarter les balais suffisamment pour permettre l'insertion du collecteur 60, puis enfin d'insérer le collecteur de manière que l'arbre d'induit 62 s'insère dans l'alvéole 35.

Un palier, référencé en 500 à la figure 20, est interposé radialement entre l'extrémité de l'arbre d'induit et la périphérie interne de la douille 35' pour montage tourillonnant de l'arbre 62 en sorte que le capot constitue le palier arrière de la machine électrique.

Comme indiqué précédemment, au cours de l'insertion du collecteur 60, celui-ci exerce une poussée sur la rondelle 64 jusqu'à ce qu'elle vienne s'engager dans le dégagement 66 et libère les balais qui viennent dès lors en appui contre les pistes collectrices du collecteur.

On procède alors à la fixation proprement dite du capot 26 sur le reste de la machine, à l'aide de tirants, de manière connue en soi.

On notera enfin que l'agencement décrit précédemment en référence aux figures 10 à 12, dans lequel on utilise une rondelle de maintien des balais qui vient se positionner après assemblage du démarreur dans le logement constitue une construction indépendante du type de montage utilisé pour la fixation des organes de raccordement électrique des balais.

Ainsi qu'il ressort à l'évidence de la description et dessins le capot 26, formant palier arrière, présente des surélévations pour la fixation et le support de la plaquette 46 en matière électriquement isolante.

Ces surélévations rigidifient le capot 26, portent les rivets de fixation 52 de la plaquette 46 et définissent des zones planes pour appui et support de la plaquette 46.

Le capot 26 est dans une forme de réalisation obtenu par moulage, notamment lorsqu'il est à base d'aluminium.

Avantageusement le capot 26 est en tôle emboutie en sorte que la réalisation est simple et économique.

En outre cela permet d'alléger le capot 26 et de réduire l'épaisseur de celui-ci ce qui est favorable pour la réduction de l'encombrement axial de la machine électrique, par exemple un démarreur de véhicule automobile.

En effet les surélévations sont obtenues par emboutissage en sorte que le capot 26 présente au niveau de sa face externe des zones creuses. Ces surélévations rigidifient le capot 26, qui peut avoir ainsi une épaisseur réduite favorable pour son emboutissage.

Dans toutes les figures représentées le capot 26 est une pièce de fermeture sans trous en sorte qu'il est étanche. Ce capot présente un logement pour la rondelle 64 après montage de la machine électrique.

On appréciera également que les surélévations permettent la création entre elles d'un dégagement référencé en 129 à la figure 7. Ce dégagement permet de créer un espace entre la plaquette 46 et le capot 26.

Grâce à cet espace les rivets 50 de fixation des cages 40,42 métalliques ne viendront pas en contact avec le capot en sorte que tout court-circuit est évité.

Grâce au dégagement 129 un espace de ventilation existe entre la plaquette 46 et le capot 26. Ce dégagement délimite au moins en partie le logement de la rondelle 64.

Bien entendu la présente invention n'est pas limitée aux exemples de réalisation décrits.

En particulier on peut conformer le capot 26, de forme annulaire, pour que celui-ci vienne en contact intime avec la carcasse cylindrique de la machine électrique représentée en partie en pointillés en 100 à la figure 12.

C'est à l'intérieur de cette carcasse, de manière connue, qu'est logé l'induit du moteur électrique de la machine électrique dont l'arbre porte la référence 62. La carcasse est réalisée par exemple par roulage d'une tôle et agrafage de celle-ci. Le capot 26 constitue un couvercle de fermeture de la carcasse 100.

Bien entendu il est possible d'optimiser la forme des surélévations.

Ainsi comme visible dans les figures 13,14 le capot 26 présente deux surélévations 126,127 en vis-à-vis s'étendant symétriquement de part et d'autre du diamètre D-D de la figure 13.

Chaque surélévation est obtenue ici par emboutissage du capot 26 en tôle et présente une zone centrale de fixation 130 et deux zones latérales de stabilisation 131,132 s'étendant circonférentiellement de part et d'autre de la zone centrale 130. Les surélévations sont obtenues ici par la technique de la semi-découpe

Les surélévations 126,127 sont dans cette réalisation globalement en forme de croissant avec deux zones latérales 131,132 se raccordant à la périphérie externe de la zone centrale 130.

Les périphéries externes des zones 131,132 prolongent la périphérie externe de la zone centrale 130.

La face supérieure des surélévations 126,127 est plane pour appui et support de la plaquette 46 en matière électriquement isolante, ici en bakelitte.

Chaque zone centrale 130 présente les rivets de fixation 52 de la plaquette 46 venus de matière avec le capot 26 ; chaque rivet 52 présentant une tige 54 venue de matière avec le capot 26 de manière précitée.

Chaque zone centrale 130 est de plus grande étendue radiale que les deux zones latérales 131,132 dites de stabilisation car elles servent uniquement à l'appui de la plaquette 46, tandis que la zone centrale 130 sert à l'appui et à la fixation de la plaquette 46.

Les zones latérales 131,136 sont en forme de secteur annulaire.

La zone centrale 130 a globalement une forme trapézoïdale ; sa périphérie interne 133 étant circulaire pour autoriser le passage de la rondelle 64 de maintien des balais 44.

Le diamètre sur lequel sont implantées les périphéries interne des surélévations 126,127 est donc supérieur au diamètre externe de la rondelle 64.

De même la plaquette 46 présente un alésage central autorisant le passage de la rondelle 64. Le diamètre interne de la plaquette 46 est donc supérieur à celui de la rondelle 64.

Cette rondelle 64 présente à sa périphérie externe une rondelle prolongée radialement vers l'intérieur par une partie centrale fragmentée en languettes 164 à la faveur de fentes 165 borgnes séparant deux à deux les languettes 164. Les fentes 165 sont des fentes radiales, qui débouchent dans l'ouverture centrale de la rondelle 64.

La rondelle 64 présente ainsi une élasticité ce qui permet à celle-ci de venir se serrer, de manière précitée, sur la douille 35' de l'alvéole 35.

Ici comme dans les figures 10 à 12 le capot 26 est embouti centralement pour former une protubérance 235 (figures 17,20) s'étendant en direction opposée aux surélévations 126,127.

Cette protubérance comporte une portée tronconique concave 335 sur laquelle est fixée par soudage l'extrémité chanfreinée de la douille 35'ici métallique. Le soudage peut être réalisé par tout type de soudage, tel que le soudage à l'arc, le soudage par résistance et le soudage par laser.

Le capot 26 présente ainsi une fonction supplémentaire à savoir une fonction de support de la douille 35' délimitant l'alvéole 35 appartenant à la partie centrale étanche du capot 26.

Cette douille 35' à elle-même une double fonction à savoir une fonction de support de la rondelle 64 à sa périphérie externe et à sa périphérie interne une fonction de support d'un palier 500, ici un palier lisse en variante un palier à aiguille, pour l'extrémité de l'arbre d'induit 62 du moteur électrique de la machine électrique.

Le capot 26 ainsi équipé constitue le palier arrière de la machine électrique.

La plaquette électriquement isolante 46 est de forme simple et économique et présente un méplat 146 et deux évidements 147 ainsi qu'un alésage central pour passage de la rondelle 64.

Comme visible à la figure 13 les évidements 147 sont prévus pour ne pas obturer les trous 301 et autoriser le passage des tirants (non visibles) de fixation du capot 26, constituant le palier arrière. Le méplat 146 permet de dégager la zone centrale 130 de la surélévation 127 pour soudage des extrémités des conducteurs 48 des balais des cages 36,38 de retour de courant à la zone centrale 130 de la surélévation 127 comme visible à la figure 13, les soudages étant représentés en noir.

Les dégagements 147 sont diamétralement opposés. La profondeur des dégagements 147 est fonction du diamètre des trous 301. Les dégagements ont ici une forme en U. La position des trous 301 de part et d'autre du diamètre D-D est due à l'implantation des tirants au niveau du palier avant de la machine électrique.

La plaquette 46 présente également des trous pour le passage des rivets 52 à tige creuse 54 et des rivets 50 ici d'un seul tenant avec les cages 36,38,40,42.

Comme visible à la figure 13 les cages de retour de courant 38,36, implantées ici à 120° l'une par rapport à l'autre, et les cages d'alimentation en courant 40,42, implantées également ici à 120° l'une par rapport à l'autre, sont disposées de part et d'autre du diamètre de symétrie D-D constituant l'axe de symétrie des échancrures 147. Les cages 42 et 38 sont implantées symétriquement de part et d'autre du diamètre D-D avec un décalage angulaire de 60° l'une par rapport à l'autre. Il en est de même des cages 40 et 46.

Ainsi les cages 42 et 36 sont diamétralement opposées et il en est de même des cages 40 et 38. Les axes des cages sont donc disposés en forme de X pour laisser une grande distance circonférentielle entre les deux cages respectivement d'alimentation en courant et de retour de courant afin d'avoir un grand écart entre les rivets 52 d'une même surélévation. Bien entendu selon les applications on peut modifier les angles entre les cages tout en ayant une disposition en forme de X des axes des cages disposées, d'une part, symétriquement par rapport à un diamètre du capot 26, globalement en forme de disque, et d'autre part, circonférentiellement de manière non régulière.

Ces cages métalliques, comme mieux visibles à la figure 19, ont globalement une forme en U avec un fond servant au guidage du patin 44 associé.

Les branches du U sont centralement chacune dotée d'une zone cylindrique pour définition d'un logement cylindrique pour le montage du ressort de rappel 45, ici du type ressort à boudin sollicitant le balai 44 vers le centre. Chaque balai 44, comme mieux visible à la figure 17, présente un téton (non référencé) pour le centrage de l'extrémité inférieure du ressort 45, dont l'extrémité supérieure prend appui sur des pattes de maintien 381 issues des branches des cages.

Plus précisément on monte dans chaque cage le ressort 45 et le balai 44, puis on referme les pattes 381 pour verrouiller le ressort 45 ; la rondelle 64 étant bien entendu en position pour ne pas perdre les balais 44.

Bien entendu l'une des branches de la cage présente une fente borgne (non référencée à la figure 19) pour le passage du conducteur 48 solidaire de chaque balai 44.

Ici deux pattes de maintien 381 du ressort 45 concerné sont prévues par branches.

Les pattes 381 sont dirigées l'une vers l'autre et sont réalisées par découpe à la faveur d'une fente. Les extrémités libres des branches des cages sont prolongées chacune par une aile (non référencée à la figure 19) s'étendant parallèlement au fond de la cage. Les ailes sont destinées à venir en contact avec la plaquette 46 et sont conformées pour présenter les rivets 50 venus ici de matière avec ses ailes. Les ailes sont donc des ailes de fixation des cages et sont obtenues par pliage du fait que les cages sont métalliques.

La nature métallique des cages permet de simplifier celles-ci tout en leur donnant la forme et les fonctions souhaitées. Les cages ont donc une forme simple et économique.

Pour éviter tout court-circuit les cages 40,42 d'alimentation en courant, sont en variante obturées par un capuchon 140 en matière électriquement isolante, ici en matière plastique moulable.

Chaque capuchon 140 recouvre les branches des cages 40,42 au niveau des pattes 381 de celles-ci. Chaque capuchon 140 comporte un fond portant deux demi-pions 141,142 dotés chacun de nervures 143 destinées à s'engager à force entre les deux branches des cages de part et d'autre des portions cylindriques de celles-ci, c'est-à-dire de part et d'autre des pattes 381.

Chaque capuchon comporte un rebord périphérique perpendiculaire à son fond. Ce rebord est interrompu au niveau du demi-pion 141 destiné à venir en prise localement par ses nervures avec la partie des branches des cages adjacente aux ailes portant les rivets. Les cages 40,42 sont donc ceinturées chacune par le rebord du capuchon 140 se montant ainsi par encliquetage dans les cages présentant une élasticité pour obturer radialement la partie supérieure de celles-ci.

On appréciera que la plaquette isolante 46 offre un appui aux balais et supporte les cages.

L'autre surélévation 126 est prolongée vers l'extérieur par une patte 134 s'étendant radialement en saillie par rapport à la périphérie externe 135 du capot 26, globalement en forme de disque annulaire. C'est sur cette patte 134 que se monte le passe-fil 49 globalement en forme d'équerre. Pour ce faire le passe-fil 49 (figure 15) présente une aile supérieure 153 prolongée par une portion (non référencée) présentant un trou 152 destiné à s'engager de manière complémentaire sur la patte 134 de section rectangulaire comme le trou 152.

Grâce au trou 152 le passe-fil 49 est fixé sur le capot 26, sachant que son autre aile 150, perpendiculaire à l'aile supérieure 153, est destinée à venir en contact avec la face supérieure de la plaquette 46.

Cette aile 150, suivant une caractéristique, est allongée circonférentiellement pour recouvrir les deux rivets de fixation 52 venus de matière avec le capot 26. Ainsi on évite tout court-circuit entre les rivets 52 et les conducteurs 48 des cages 40,42. Ces deux conducteurs 48 sont fixés, par exemple par soudage, sur un élément de liaison 148 électriquement conducteur traversant un trou 149 de passage prévu dans l'aile supérieure 153 à extrémité libre arrondie. Le bord de l'aile 153 est pourvu d'une rainure 151 pour montage du passe-fil sur le bord d'une échancrure réalisée à l'extrémité de la carcasse ou culasse 100 métallique. La hauteur de la rainure 151 est fonction de l'épaisseur de la carcasse 100. L'échancrure de la carcasse 100 a une forme complémentaire à celle du fond de la rainure 151.

Ainsi l'aile 153 ferme de manière étanche l'échancrure de la carcasse, présentant donc un fond arrondi, du fait que les flancs de sa rainure recouvrent la carcasse.

Le passe-fil 49 se monte donc par enfilage axial sur la carcasse 100, avantageusement avec serrage. Le passe-fil 49, en matière électriquement isolante, souple et déformable, telle que de l'élastomère ou du caoutchouc assure, outre des fonctions d'isolation électrique, des fonctions de fixation ; la rainure 151 se montant à serrage sur la carcasse 100, le trou 152 se montant à serrage sur l'extrémité libre de la patte 134, tandis que la pièce de liaison 148 traverse à serrage le trou 149.

Du fait de ces serrages, on obtient de bonne étanchéité.

Le passe-fil 49 est donc également une pièce d'étanchéité.

On appréciera que la périphérie externe 128, de forme annulaire, des surélévations 126,127 s'étend légèrement radialement en-dessous de la périphérie externe 135 du capot 26. Le diamètre de la périphérie externe 135 du capot est donc légèrement supérieur à celui de la périphérie externe des surélévations 126,127.

Cette différence de diamètre est fonction de l'épaisseur de la carcasse 100 de façon que la carcasse vienne en appui sur le capot 26 au-delà de la périphérie externe 128 comme visible à la figure 17.

La périphérie externe 128 des surélévations est en contact intime avec la périphérie interne de la carcasse comme visible dans cette figure 17.

La périphérie externe 128 de surélévation, globalement de forme cylindrique, compte tenu de la hauteur des surélévations 126,127, définit donc un diamètre de centrage sur la culasse 100.

Le capot se monte donc à centrage sur la culasse 100 en s'emboîtant dans celle-ci. Bien entendu les bords des surélévations sont rayonnés comme visible à la figure 14 du fait que celles-ci sont obtenues par emboutissage.

Dans cette figure 14 la douille 35' n'est pas encore fixée sur le capot 26.

Dans les figures 13 à 20 l'épaisseur des surélévations est supérieure à l'épaisseur de la rondelle 64 en sorte que la présence du dégagement 66 des figures 10 à 12 n'est pas nécessaire, le dégagement 129 entre les surélévations réalisant cette fonction. Bien entendu on peut prévoir une rondelle de butée pour l'extrémité de l'arbre d'induit 62 comme visible en 400 à la figure 17. Dans ce cas la rondelle 400 est montée dans le fond de la protubérance 235.

Le montage est réalisé comme dans les figures 10 à 12, la figure 17 représentant l'ensemble porte-balais avant montage du collecteur et la figure 20 représentant la position juste après insertion complète du collecteur entre les balais.

Ce collecteur 60 présente des pistes électriquement 161 conductrices portées par un support 160 en matière électriquement isolante solidaire de manière connue de l'arbre d'induit 62 de la machine électrique.

Le support 160 est classiquement en matière plastique, son alésage interne étant étagé en diamètre, comme visible à la figure 20, pour le logement de la douille 35' ; l'extrémité libre de l'arbre d'induit 62 étant de diamètre réduit pour son montage à rotation dans le palier 500 porté intérieurement par la douille 35'.

Selon une caractéristique, en combinaison avec le serrage de l'organe de limitation 64 monté à serrage sur le capot 26, le support 160 - et donc le collecteur 60- présente à son extrémité libre une collerette 163 d'orientation axiale, ici venue de matière avec le support 160 par moulage. La collerette 163 est continue ou en variante fragmentée en secteurs annulaires par des fentes.

La collerette 163 est implantée à la périphérie interne du support 160 et donc du collecteur 60.

La collerette 163 prolonge l'alésage interne du support 160.

Ici la collerette 163, de forme annulaire, est de faible longueur axiale en sorte qu'elle a la forme du bourrelet de forme annulaire.

L'extrémité libre de la collerette est de forme arrondie pour contact local avec la rondelle 64. Toute autre conformation de la collerette pour contact local avec la rondelle 64 est envisageable.

Ici la collerette a une forme de godron. Lors du montage le collecteur 60 vient donc pousser sur la rondelle 64 de maintien des balais 44 sur la périphérie interne de celle-ci en sorte que celle-ci ne risque pas de basculer.

Le godron 163 vient donc en contact avec les languettes 164 de la rondelle pour déplacer axialement la rondelle 64 montée à serrage sur la douille 35'.

Aucun basculement n'est donc à craindre.

En final, après montage sur la carcasse 100, un jeu J existe entre la rondelle 64 et le capot 26 et le godron 163 est en contact avec la rondelle 64. Ce jeu évite une transmission de la chaleur entre le capot et la rondelle 64 tout en s'affranchissant des tolérances de fabrication et en assurant après montage de la machine une libération des balais.

Lorsque le moteur électrique de la machine s'arrête on a donc un freinage de l'arbre d'induit grâce au godron en contact avec la rondelle 64.

Un dispositif de freinage de l'arbre est réalisé. On tire parti du montage à serrage de la rondelle 64.

Le godron 163 a une double fonction et constitue donc à la fois un outil de déplacement axial de la rondelle 64 pour libération des balais 44 et un organe de freinage de l'arbre 62 solidaire du support 160 de manière connue.

Bien entendu on peut inverser les structures. Par exemple la protubérance 235 peut être dirigée vers le collecteur 60 et la portée tronconique de la douille 35' être réalisée à la périphérie interne de celle-ci. Dans ce cas il faut prévoir un dégagement de réception de la rondelle comme visible en 66 dans les figures 10 à 12.

La collerette 163 peut être plus longue axialement.

La hauteur des surélévations 126,127 dépend des applications.

La zone centrale 130 peut être prolongée afin de supprimer les zones latérales associées aux cages 36,38 reliées à la masse lorsque ces cages sont fixées directement sur le capot comme visible à la figure 9.

L'une des surélévations peut donc être dépourvue d'ailes latérales.

Ici les cages 40,42 sont avantageusement côte à côte. Bien entendu, en variante, elles peuvent être diamétralement opposées. Dans ce cas il faut prévoir deux passe fils.

En liaison avec le mode de fixation de la figure 9, on voit que chaque surélévation peut ne comporter qu'une zone latérale de plus faible hauteur que l'autre zone de fixation.

On appréciera que la rondelle 64 de limitation du déplacement radial des balais, la collerette 163 et les surélévations 126,127 sont d'un emploi universel et s'appliquent donc également aux solutions décrites dans les pages 1 et 2 de la description. L'ensemble porte-balais peut donc faire appel à des vis de fixation.

Bien entendu la machine électrique peut être un actionneur pour la commande des balais d'essuyage d'un véhicule automobile ou pour la commande du ventilateur de refroidissement du véhicule.

L'organe de limitation en variante consiste en une rondelle solidaire à sa périphérie interne d'un tube monté à serrage sur la périphérie externe de la douille 35'. Par exemple le tube est en matière plastique et présente à ses extrémités axiales des languettes se serrant sur la périphérie externe de la douille 35', qui appartient au capot 26. En variante le tube porte intérieurement deux joints montés à serrage sur la douille 35'. En variante la périphérie externe de la douille 35' présente des crans ou un moltage pour montage à force de la rondelle 64 avantageusement dépourvue de languettes et de dureté inférieure à celle de la douille.

Dans tous les cas le serrage est déterminé pour autoriser un déplacement axial de l'organe de limitation 64 comprenant avantageusement une rondelle.

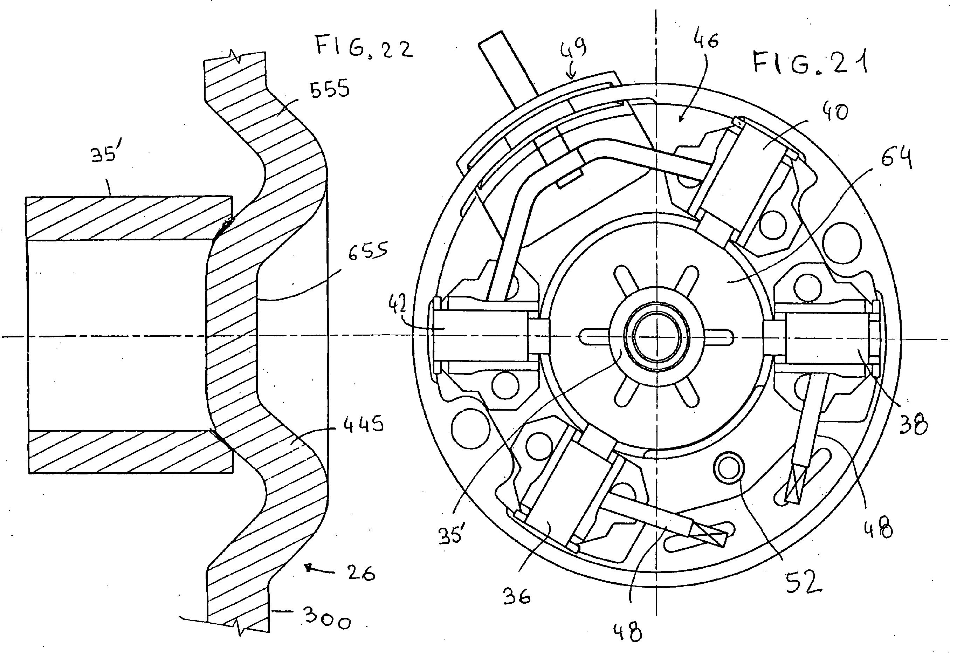

En variante la surélévation 127 porte centralement un seul rivet 52 (figure 21) et deux bossages 227 de forme oblongue disposés de manière symétrique par rapport au rivet 52 précité. La plaquette 46 présente alors, au niveau de la surélévation 127, à sa périphérie interne un contour en forme de V pour créer un dégagement pour les bossages 227 servant au soudage précis des extrémités dénudées, schématisés par des croix, des conducteurs 48.

A la figure 20 la douille 35' est chanfreinée extérieurement pour coopérer à centrage avec la portée 335. En variante (FIGURE 22) cette portée tronconique 445 est convexe en sorte que la douille 35' est chanfreinée intérieurement pour coopérer à centrage avec cette portée 445 pour être soudée de manière plus résistante sur celle-ci. Cette disposition conduit à augmenter la longueur de la culasse. Pour palier cet inconvénient la portée 445 se raccorde à la périphérie interne300 de la partie périphérique du capot 26 par l'intermédiaire d'une portée tronconique concave 555. Les portées 445, 555 appartiennent à des parois tronconiques inclinées en sens inverse et délimitant, vue de l'extérieur un bourrelet annulaire à sommet arrondi et à flancs inclinés et vue de l'intérieur une gorge annulaire à flancs inclinés et à fond arrondi. Le fond 655 de la protubérance, délimité par la portée 445, est ici dans le plan de la périphérie interne 300 de la partie périphérique du capot étanche 26. En variante le fond 655 s'étend en saillie ou en retrait par rapport à cette périphérie interne. Grâce à cette disposition la soudure de la douille est résistante tout en augmentant moins la longueur axiale de la carcasse qu'avec une solution à portée uniquement convexe. La solution de la figure 22 conduit à une double opération d'emboutissage.

## Revendications

1. Machine électrique comportant un collecteur (60) solidaire d'un arbre d'induit (62, un ensemble porte-balais, comprenant un capot (26) formant palier destiné à être monté sur une carcasse de la machine et un ensemble d'organes (28, 30, 32, 34) de raccordement électrique des balais montés sur le capot (26), dans lequel une partie des organes de raccordement électrique desdits balais est constituée par des cages de guidage (36, 38, 40, 42) adaptées pour recevoir un balai (44) respectif ; lesdites cages de guidage étant pourvues intérieurement de moyens élastiques (45) sollicitant, en fonctionnement, les balais radialement en appui contre le collecteur (60) de la machine électrique, et dans lequel un organe (64), dit organe de limitation, formant butée de limitation du déplacement radial des balais en l'absence de collecteur est prévu, **caractérisée en ce que** les dimensions de l'organe de limitation (64) sont adaptées pour obtenir un montage serré de cet organe sur le capot (26).

2. Machine selon la revendication 1, **caractérisée en ce que** le collecteur (60) de la machine présente à sa périphérie interne une collerette (163) axialement saillante pour contact avec la périphérie interne de l'organe de limitation (64).

3. Machine électrique selon la revendication 2, **caractérisée en ce qu'**après montage de la machine un jeu axial (j) existe entre le collecteur (60) et le capot (26).

4. Machine électrique selon la revendication 2, **caractérisée en ce que** l'extrémité libre de la collerette est profilée pour contact local avec l'organe de limitation (64).

5. Machine électrique selon la revendication 2, **caractérisée en ce que** le collecteur (60) présente un support (160) portant des pistes collectrices (161) pour les balais (44) et **en ce que** le support présente à son extrémité libre la collerette (163).

6. Machine électrique selon la revendication 1, **caractérisée en ce que** l'organe de limitation du déplacement radial des balais comporte une rondelle (64) interposée entre les balais, sur la paroi périphérique de laquelle les balais viennent prendre appui et dont le diamètre externe est sensiblement supérieur à celui du collecteur.

7. Machine électrique selon la revendication 1, **caractérisée en ce que** le capot (26) est pourvu d'un logement (129,66) de réception de l'organe de limitation(64).

8. Machine électrique selon la revendication 7, **caractérisée en ce que** le logement est formé au moins en partie par un dégagement (129) délimité par deux surélévations (126,127) que présente le capot (26) pour la fixation d'une plaquette (46) en matière électriquement isolante solidaire des cages de guidage (36,38,40,42).

9. Machine selon la revendication 8, **caractérisée en ce que** les surélévations (126,127) présentent au moins une zone de fixation (130) de la plaquette (46) et une zone latérale (131,132) de plus faible étendue radiale pour créer le dégagement (129) permettant également la fixation d'au moins une cage de guidage.

10. Machine selon la revendication 1, **caractérisée en ce que** le capot (26) porte à fixation une douille (35') d'orientation axiale et **en ce que** l'organe de limitation (64) est destiné à venir se serrer sur la périphérie externe de la douille (35').

11. Machine selon la revendication 10, **caractérisée en ce que** l'organe de limitation est une rondelle comportant une partie centrale fragmentée en languettes (164) à la faveur de fentes borgnes (165), **en ce que** les languettes (164) sont destinées à venir se serrer sur la périphérie externe de la douille (35') et **en ce qu'**en l'absence de collecteur les balais (44) viennent prendre appui sur la périphérie externe de la rondelle (64) dont le diamètre externe est sensiblement supérieur à celui du collecteur (60).

12. Machine selon la revendication 1, **caractérisée en ce que** les cages de guidage (36,38,40,42) sont montées sur le capot (26) au moyen de rivets (50, 52) qui comportent chacun au moins une tige (54) s'étendant à partir de l'une des pièces constituées par le capot (26) et l'un desdits organes (28, 30, 32, 34), traversant un orifice pratiqué dans l'autre pièce et rabattu contre cette dernière, et **en ce que** ladite tige (54) est venue de matière avec la pièce à partir de laquelle elle s'étend et comporte une base (56) obturée.

13. Procédé d'assemblage d'une machine électrique pourvue d'un ensemble porte-balais selon la revendication 2, **caractérisé en ce qu'**il comporte les étapes consistant à :
- riveter les organes de raccordement électrique des balais sur le capot (26),
- insérer les moyens élastiques dans les cages de guidage,
- positionner les balais (44) dans les cages de guidage en appui contre les moyens élastique,
- insérer l'organe (64) de limitation du déplacement radial des balais, et
- positionner l'ensemble porte-balais ainsi réalisé autour du collecteur (60) de la machine de sorte que ce dernier exerce par l'intermédiaire de la collerette (163) une poussée sur l'organe (64) de limitation du déplacement des balais telle que ces derniers soient libérés dudit organe.

## Claims

1. Electric machine comprising a collector (60) formed in one piece with an armature shaft (62), a brush-holder assembly comprising an end cap (26) forming a bearing to be mounted on a carcass of the machine, and a set of members (28, 30, 32, 34) for electrical connection of the brushes mounted on the end cap (26), some of the members for electrical connection of said brushes being formed of guide cages (36, 38, 40, 42) adapted for accommodating a respective brush (44); said guide cages being provided internally with resilient means (45) urging the brushes, during operation, radially into abutment against the collector (60) of the electric machine, and a member (64) referred to as a limiting member being provided and forming a stop for limiting the radial displacement of the brushes in the absence of a collector, **characterised in that** the dimensions of the limiting member (64) are adapted for obtaining a tight fit of this member on the end cap (26).

2. Electric machine according to claim 1, **characterised in that** the collector (60) of the machine has, on its inner periphery, an axially projecting collar (163) for contact with the inner periphery of the limiting member (64).

3. Electric machine according to claim 2, **characterised in that**, after assembly of the machine, an axial clearance (j) exists between the collector (60) and the end cap (26).

4. Electric machine according to claim 2, **characterised in that** the free end of the collar is profiled for local contact with the limiting member (64).

5. Electric machine according to claim 2, **characterised in that** the collector (60) has a support (160) carrying collecting tracks (161) for the brushes (44), and **in that** the support has the collar (163) at its free end.

6. Electric machine according to claim 1, **characterised in that** the member for limiting the radial displacement of the brushes comprises a washer (64) interposed between the brushes, against the peripheral wall of which washer the brushes come to rest and the outer diameter of which washer is substantially greater than that of the collector.

7. Electric machine according to claim 1, **characterised in that** the end cap (26) is provided with a housing (129, 66) for accommodating the limiting member (64).

8. Electric machine according to claim 7, **characterised in that** the housing is formed, at least in part, by a clearance (129) delimited by two raised areas (126, 127) which the end cap (26) has for fixing a board (46) made of electrically insulating material formed In one piece with the guide cages (36, 38, 40, 42).

9. Machine according to claim 8, **characterised in that** the raised areas (126, 127) have at least one area (130) for fixing the board (46) and a lateral area (131, 132) of lesser radial extent for creating the clearance (129) also allowing at least one guide cage to be fixed.

10. Machine according to claim 1, **characterised in that** the end cap (26) carries a bush (35') of axial orientation, which is fixed on, and **in that** the limiting member (64) is to be clamped onto the outer periphery of the bush (35').

11. Machine according to claim 10, **characterised in that** the limiting member is a washer comprising a central part subdivided into tabs (164) by means of blind slots (165), **in that** the tabs (164) are to be clamped onto the outer periphery of the bush (35'), and **in that**, in the absence of a collector, the brushes (44) come to rest against the outer periphery of the washer (64), of which the outer diameter is substantially greater than that of the collector (60).

12. Machine according to claim 1, **characterised in that** the guide cages (36, 38, 40, 42) are mounted on the end cap (26) by means of rivets (50, 52) which each include at least one shank (54) extending from one of the pieces formed by the end cap (26) and one of said members (28, 30, 32, 34), passing through an orifice formed in the other piece and folded over against said other piece, and **in that** said shank (54) is formed in one piece with the piece from which it extends and includes a closed base (56).

13. Method for assembling an electric machine provided with a brush-holder assembly according to claim 2, **characterised in that** said method comprises the following steps:
- riveting the members for electrical connection of the brushes onto the end cap (26),
- inserting the resilient means into the guide cages,
- positioning the brushes (44) in the guide cages so as to bear against the resilient means,
- inserting the member (64) for limiting the radial displacement of the brushes, and
- positioning the brush-holder assembly thus formed around the collector (60) of the machine in such a way that said collector, by means of the collar (163), exerts a thrust on the member (64) for limiting the displacement of the brushes such that said brushes are released from said member.

## Patentansprüche

1. Elektrische Maschine mit einem Kollektor (60), der fest mit einer Ankerwelle (62) verbunden ist, mit einer Bürstenhalterung mit einer Haube (26), die ein Lager bildet, welches für die Montage auf einem Gehäuse der Maschine geeignet ist, und einer Baugruppe von Organen (28, 30, 32, 34) für den elektrischen Anschluss der auf die Haube (26) montierten Bürsten, in der ein Teil der Organe für den elektrischen Anschluss der Bürsten von Führungskäfigen (36, 38, 40, 42) gebildet wird, die geeignet sind, jeweils eine Bürste (44) aufzunehmen; wobei die besagten Führungskäfige innen mit elastischen Mitteln (45) versehen sind, die die Bürsten im Betrieb radial gegen den Kollektor (60) der elektrischen Maschine andrücken, und in der ein Organ (64), das so genannte Begrenzungsorgan, das bei fehlendem Kollektor einen Grenzanschlag für die radiale Verschiebung der Bürsten bildet, vorgesehen ist, **dadurch gekennzeichnet, dass** die Abmessungen des Begrenzungsorgans (64) geeignet sind, um eine feste Montage dieses Organs auf der Haube (26) zu erzielen.

2. Maschine nach Anspruch 1, **dadurch gekennzeichnet, dass** der Kollektor (60) der Maschine an seinem inneren Umfang einen axial vorspringenden Flansch (163) für den Kontakt mit dem inneren Umfang des Begrenzungsorgans (64) aufweist.

3. Elektrische Maschine nach Anspruch 2, **dadurch gekennzeichnet, dass** nach der Montage der Maschine ein axiales Spiel (j) zwischen dem Kollektor (60) und der Haube (26) vorhanden ist.

4. Elektrische Maschine nach Anspruch 2, **dadurch gekennzeichnet, dass** das freie Ende des Flansches für den örtlichen Kontakt mit dem Begrenzungsorgan (64) profiliert ist.

5. Elektrische Maschine nach Anspruch 2, **dadurch gekennzeichnet, dass** der Kollektor (60) einen Träger (160) aufweist, der Kollektorbahnen (161) für die Bürsten (44) trägt, und dadurch, dass der Träger an seinem freien Ende den Flansch (163) aufweist.

6. Elektrische Maschine nach Anspruch 1, **dadurch gekennzeichnet, dass** das Begrenzungsorgan für die radiale Verschiebung der Bürsten einen sich zwischen den Bürsten befindlichen Schleifring (64) umfasst, auf dessen peripherer Wand sich die Bürsten abstützen, und dessen Außendurchmesser deutlich größer als derjenige des Kollektors ist.

7. Elektrische Maschine nach Anspruch 1, **dadurch gekennzeichnet, dass** die Haube (26) mit einer Aufnahme (129, 66) für das Begrenzungsorgan (64) versehen ist.

8. Elektrische Maschine nach Anspruch 7, **dadurch gekennzeichnet, dass** die Aufnahme zumindest teilweise von einer von zwei Erhebungen (126, 127) begrenzten Aussparung (129) gebildet wird, die durch die Haube (26) für die Befestigung eines Plättchens (46) aus elektrisch isolierendem Material geboten wird, welches fest mit den Führungskäfigen (36, 38, 40, 42) verbunden ist.

9. Maschine nach Anspruch 8, **dadurch gekennzeichnet, dass** die Erhebungen (126, 127) zumindest einen Bereich für die Befestigung (130) des Plättchens (46) aufweisen und einen seitlichen Bereich (131, 132) mit geringerer radialer Ausdehnung zur Gestaltung der Aussparung (129), welche ebenfalls die Befestigung von zumindest einem Führungskäfig erlaubt.

10. Maschine nach Anspruch 1, **dadurch gekennzeichnet, dass** die Haube (26) zur Befestigung eine Hülse (35') für eine axiale Ausrichtung trägt, und dadurch, dass das Begrenzungsorgan (64) dafür vorgesehen ist, sich gegen den äußeren Umfang der Hülse (35') zu drücken.

11. Maschine nach Anspruch 10, **dadurch gekennzeichnet, dass** das Begrenzungsorgan ein Schleifring ist, der einen in Lamellen (164) unterteilten mittleren Teil mit blinden Schlitzen (165) umfasst, dass die Lamellen (164) dafür vorgesehen sind, sich gegen den äußeren Umfang der Hülse (35') zu drücken, und dass bei fehlendem Kollektor die Bürsten (44) sich auf dem äußeren Umfang des Schleifrings (64) abstützen, dessen Außendurchmesser deutlich größer als derjenige des Kollektors (60) ist.

12. Maschine nach Anspruch 1, **dadurch gekennzeichnet, dass** die Führungskäfige (36, 38, 40, 42) mit Nieten (50, 52) auf der Haube (26) montiert sind, die jeweils zumindest einen Schaft (54) umfassen, der sich von einem von der Haube (26) und von einem der besagten Organe (28, 30, 32, 34) gebildeten Teil aus erstreckt, der eine im anderen Teil vorhandene Öffnung durchquert und gegen letzteres umgelegt ist, und dadurch, dass der besagte Schaft (54) einstückig mit dem Material des Teils verbunden ist, von dem aus er sich erstreckt und eine blind verschlossene Basis (56) umfasst.

13. Montageverfahren einer elektrischen Maschine mit einer Bürstenhalterung nach Anspruch 2, **dadurch gekennzeichnet, dass** es die folgenden Schritte umfasst:
- die Organe für den elektrischen Anschluss der Bürsten auf die Haube (26) nieten,
- die elastischen Mittel in die Führungskäfige einsetzen,
- die Bürsten. (44) in den Führungskäfigen an den elastischen Mitteln anliegend positionieren,
- das Begrenzungsorgan (64) für die radiale Verschiebung der Bürsten einsetzen, und
- die somit erhaltene Bürstenhalterung um den Kollektor (60) der Maschine so positionieren, dass letzterer vermittels des Flansches (163) einen solchen Schub auf das Begrenzungsorgan (64) für die Verschiebung der Bürsten ausübt, dass letztere vom besagten Organ freigesetzt werden.
